# EUROPÄISCHE PATENTANMELDUNG

(11) **EP 2 063 254 A2**
(43) Veröffentlichungstag der Anmeldung: **27.05.2009**
(21) Anmeldenummer: 08019314.7
(22) Anmeldetag: 05.11.2008
(51) Int. Cl.: G01N 21/45

(54) **Verfahren zur Bestimmung des Phasenüberganges eines in einem Gasstrom befindlichen Multikomponententropfens, in dem kristalline Feststoffe gelöst sind, in einen festen Zustand**

(30) Priorität: 17.11.2007 DE 102007055000
(71) Anmelder: IAV GmbH Ingenieurgesellschaft Auto und Verkehr, 10587 Berlin (DE)
(72) Erfinder: Maaß, Jochen, 38518 Gifhorn (DE)
(74) Vertreter: Buss, Fritz Gerd

(57) **Zusammenfassung**

Die Bestimmung des Phasenüberganges eines in einem Gasstrom befindlichen Multikomponententropfens, in dem kristalline Feststoffe gelöst sind, in einen festen Zustand erfolgt mittels einer Streulichtdetektion, bei der die auf eine bestimmte Temperatur erwärmten Flüssigkeitstropfen zur Detektierung ihrer Interferenzmuster durch einen Laserstrahl geführt werden. Die Detektierung der Interferenzmuster erfolgt dabei mittels eines auf die Laserlichffrequenz abgestimmten CCD-Arrays oder eines Photopapiers. Bei einer detektierten signifikanten Interferenzmusteränderung bei einer gleichen Tröpfchengröße aber bei unterschiedlichen Tröpfchentemperaturen erfolgt der Phasenübergang der flüssigen Tröpfchen in einen festen Zustand.

## Beschreibung

Die Erfindung betrifft ein Verfahren zur Bestimmung des Phasenüberganges eines in einem Gasstrom befindlichen Multikomponententropfens, in dem kristalline Feststoffe gelöst sind, in einen festen Zustand.

Aus der DE 198 33 339 C1 ist bekannt, mittels einer Laser induzierten Breakdown-Detektion die Konzentration der Partikel im Messmedium, beispielsweise Kolloide in einer Lösung, sowie deren Partikelgröße zu bestimmen. Das Prinzip der Laser induzierten Breakdown-Detektion basiert auf der Erzeugung eines dielektrischen Zusammenbruchs (Breakdowns) im Fokus eines energiereichen gepulsten Laserstrahls. Da die Energieschwelle zur Breakdown-Auslösung in fester Materie niedriger liegt, als in Flüssigkeiten bzw. Gasen, können bei geeigneter Pulsenergie Breakdown-Ereignisse selektiv durch im Fokusvolumen anwesende Partikel ausgelöst werden. Der gepulste Laserstrahl wird mit einer Sammellinse in das Messmedium fokussiert. Durch geeignete Wahl der Laser-Pulsenergie wird der Breakdown, d. h. ein Plasma, nur bei Anwesenheit eines Partikels im Fokusvolumen ausgelöst. Mit der optisch detektierbaren Plasmabildung ist eine kurzzeitige Volumenexpansion und damit die Auslösung einer Druckwelle im Messmedium verbunden. Ein an das Medium angekoppelter piezoelektrischer Wandler (Druckwellensensor) wandelt die Druckamplitude in ein elektrisches Signal um. Ein Vergleich der detektierten Druckwellen mit der Anzahl der abgegebenen Laserpulse ergibt eine Breakdown-Häufigkeit. Die Partikelgröße wird mit Hilfe der Halbwertsbreite der Verteilungsfunktion anhand einer vorher mit Partikeln bekannter Größe aufgenommenen Kalibrierkurve ermittelt.

Die DE 10 2004 004 098 B3 beschreibt ein Verfahren zum Detektieren von feinen Partikeln in einem Trägermedium mittels einer Streulichtdetektion. Das Trägermedium durchströmt dabei das Streulichtzentrum auf seinem Strömungspfad durch das Gehäuse des Streulichtdetektors, während das Licht der Lichtquelle das Streulichtzentrum und somit das dort durchströmende Trägermedium durchquert. Das Licht wird, sofern es nicht an Partikeln in dem Trägermedium gestreut wird, in einer der Lichtquelle gegenüberliegenden Lichtfalle absorbiert. Trifft der Licht- oder Laserstrahl der Lichtquelle auf ein Partikel, lenkt dieses Partikel einen Bruchteil des Lichts als Streulicht aus seiner ursprünglichen Richtung ab. Dieses Streulicht wird dann durch einen höchst lichtempfindlichen Streulichtempfänger aufgenommen und mittels einer nachfolgenden Auswertschaltung in seiner Intensität gemessen. Aufgrund der ermittelten Streulichtintensität lassen sich die Partikelkonzentrationen im Gasstrom ermitteln.

Mit diesen Verfahren können nur die Partikelkonzentration und gegebenenfalls ihre Größe in einer Gasströmung oder in einer Flüssigkeit ermittelt werden.

Zur Nachbehandlung der Abgase einer Verbrennungskraftmaschine findet in jüngster Zeit immer stärker der Einsatz eines SCR-Katalysators zur selektiven katalytischen Reduktion der Abgase Anwendung. Dabei wird, wie beispielsweise in der DE 10 2006 043 100 A1 beschrieben, in die Abgase der Verbrennungskraftmaschine eine Harnstoff-Wasser-Lösung zur selektiven katalytischen Reduktion eingedüst. Die im Abgas vorhandenen Stickoxide (NOₓ-Emission) werden letztlich mit dem in der Harnstoff-Wasser-Lösung intrinsisch vorhandenen Ammoniak in dem SCR-Katalysator zu Stickstoff und Wasser umgesetzt. Die Reaktion ist umso kontrollierter, je feiner das Reduktionsmittel verdüst werden kann und je homogener das Reduktionsmittel vor Eintritt in den Katalysator im Abgas verteilt ist. Eine Phasenumwandlung der Harnstoff-Wasser-Lösung von einem flüssigen in einen festen Zustand kann während des Verdampfungsprozesses des Wasseranteils beim Zusammentreffen der Harnstoff-Wasser-Lösung mit den heißen Abgasen erfolgen. Für eine effektive Wirkungsweise des SCR-Katalysators ist die Phasenumwandlung der Harnstoff-Wasser-Lösung von einem flüssigen in einen festen Zustand und weiter die thermo- und hydrolytische Umwandlung zu Ammoniak ein wichtiger Kennwert zur simulativen Auslegung und Beurteilung einer Reduktionsmittelsteuerung in einer Abgasnachbehandlungsanlage für Brennkraftmaschinen.

Der Erfindung liegt die Aufgabe zugrunde, ein Verfahren zur Bestimmung des Phasenüberganges eines in einem Gasstrom befindlichen Multikomponententropfens, in dem kristalline Feststoffe gelöst sind, in einen festen Zustand zu schaffen.

Diese Aufgabe wird erfindungsgemäß durch die kennzeichnenden Merkmale des Patentanspruches 1 gelöst.

Die Bestimmung des Phasenüberganges eines in einem Gasstrom befindlichen Multikomponententropfens, in dem kristalline Feststoffe gelöst sind, in einen festen Zustand erfolgt mittels einer Streulichtdetektion, bei der die auf eine bestimmte Temperatur erwärmten Flüssigkeitstropfen zur Detektierung ihrer Interferenzmuster durch einen Laserstrahl geführt werden. Die Detektierung der Interferenzmuster erfolgt dabei mittels eines auf die Laserlichtfrequenz abgestimmten CCD-Arrays oder eines Photopapiers. Bei einer detektierten signifikanten Interferenzmusteränderung bei einer gleichen Tröpfchengröße, aber bei unterschiedlichen Tröpfchentemperaturen erfolgt der Phasenübergang der flüssigen Tröpfchen in einen festen Zustand.

Der Vorteil des erfindungsgemäßen Verfahrens besteht darin, dass mit einfachen Mitteln der Phasenübergang eines in einem Gasstrom befindlichen flüssigen kristallinen Tropfens in den festen Zustand mit hoher Genauigkeit ermittelt werden kann. Die Kenntnis des Phasenüberganges im Tropfen (Kristallitbildung) als Funktion der Zeit und der Temperatur ist für die Kenntnis des Verdampfungsprozesses und damit für die Darstellung der Betriebssicherheit von SCR-Katalysatoren zur Abgasnachbehandlung wichtig. Bei dem Einsatz von SCR-Katalysatoren zur Abgasnachbehandlung von Brennkraftmaschinen wird zur Reduktion der Stickoxide dem Abgasstrom eine wässrige Harnstofflösung eingedüst. Durch die ermittelten Daten des Phasenübergangs der Harnstofftröpfchen von flüssig nach fest kann eine simulative Auslegung der Abgasstrecke eines der Verbrennungskraftmaschine nachgeschalteten Katalysators präziser erfolgen. Mittels der ermittelten Daten des Phasenübergangs in den Harnstofftröpfchen können auch die im Katalysator ablaufenden chemischen Prozesse besser beurteilt und eingeschätzt werden. Dadurch wird erreicht, dass durch die bessere Auslegung des Katalysators der NOₓ-Emissionsausstoß von Brennkraftmaschinen reduziert wird.

Weitere vorteilhafte Ausgestaltungen sind in den Unteransprüchen beschrieben, sie werden in der Beschreibung zusammen mit ihren Wirkungen erläutert.

Die erfindungsgemäße Lösung zur Bestimmung des Phasenüberganges eines in einem Gasstrom befindlichen Multikomponententropfens, in dem kristalline Feststoffe gelöst sind, in einen festen Zustand wird nachfolgend an Ausführungsbeispielen näher beschrieben.

Das erfindungsgemäße Verfahren wird erläutert am Beispiel des Phasenüberganges von flüssigen Harnstofftröpfchen in einen festen Zustand. Die Bestimmung des Phasenüberganges eines in einem Gasstrom befindlichen Multikomponententropfens, in dem kristalline Feststoffe gelöst sind, in einen festen Zustand erfolgt mittels der Streulichtdetektion. Dabei werden die durch einen Tropfengenerator gebildeten Flüssigkeitstropfen einem durch ein Gebläse oder Düsen erzeugten Gasstrom aufgegeben. Die Geschwindigkeit des Gasstromes ist dabei einstellbar. Die mit dem Gasstrom mitgerissenen Flüssigkeitströpfchen durchqueren eine temperaturregelbare Heizstrecke und werden auf eine für den Messvorgang vorbestimmte Temperatur erwärmt. Dabei wird die Temperatur für jeden Messvorgang stufenweise bis zur Verdampfung der Flüssigkeit in dem kristallinen Flüssigkeitstropfen erhöht.

Die auf die jeweilig vorbestimmte Temperatur erwärmten Flüssigkeitströpfchen werden innerhalb der Detektormesszeit mit einer konstanten Rate durch einen Laserstrahl geführt. Dabei ist der Laserstrahl vorzugsweise polarisiert und konstant oder gepulst. Mittels Lichtempfangsmittel wird aus der Totalreflexion 1. Ordnung des Laserstrahls das für die jeweilige Temperatur und für die Tröpfchengröße und dessen Brechungsindex charakteristische Interferenzmuster detektiert. Das Lichtempfangsmittel ist ein auf die Laserlichtfrequenz abgestimmtes CCD-Array oder ein Photopapier. In der Schirmebene wird ein CCD-Array in radialer Richtung positioniert und somit das für die Tropfengröße und dessen Brechungsindex charakeristische Interferenzmuster detektiert. Ändert der Tropfen seinen Aggregatzustand, d. h. kommt es im Falle wässriger Harnstofftröpfchen zur Ausbildung von Kristalliten innerhalb oder Schalen auf dem Tropfen, so ändert sich auch das Interferenzmuster signifikant. Dieser optisch detektierbare Übergang wird genutzt, um in Korrelation mit den Versuchsparametern eine quantitative Aussage der Phasenänderung zu erhalten. In Kombination mit einem weiteren Detektor, beispielsweise einem Photomultiplier, erfolgt nach einer entsprechenden Kalibrierung ebenfalls eine quantitative Bestimmung des Tropfendurchmessers und mittels Bestimmung des Abstandes der Extrema im Interferenzmuster der effektive Brechungsindex vor Änderung des Aggregatzustandes. Alternativ bietet sich an, die Tropfengröße und -gestalt direkt über einen abbildendes Verfahren - z. B. bestehend aus einem Fernmikroskop in Verbindung mit einer CCD-Kamera - zu bestimmen.

Der detektierte Phasenübergang der Harnstofftröpfchen von flüssig nach fest wird in Abhängigkeit von der Tröpfchengröße, der Tröpfchentemperatur und der Zeit ermittelt. Die ermittelten Daten des Phasenübergangs der Flüssigkeitströpfchen von flüssig nach fest werden zur Beurteilung einer Reduktionsmittelsteuerung einer selektiven katalytischen Reduktion von Abgasen eines Verbrennungsmotors mittels einer Harnstoff-Wasser-Lösung zur Verringerung der NOₓ-Emission verwendet. Außerdem dienen sie zur verbesserten Auslegung der Abgasstrecke eines einer Verbrennungskraftmaschine nachgeschalteten SCR-Katalysators.

Das erfindungsgemäße Verfahren beschränkt sich nicht auf die Bestimmung des Phasenüberganges von Harnstofftröpfchen von flüssig nach fest, sondern es kann zur Ermittlung des Phasenübergangs für alle kristallinen Flüssigkeitstropfen Anwendung finden.

## Patentansprüche

1. Verfahren zur Bestimmung des Phasenüberganges eines in einem Gasstrom befindlichen Multikomponententropfens, in dem kristalline Feststoffe gelöst sind, in einen festen Zustand,
**dadurch gekennzeichnet, dass**
- die Flüssigkeitstropfen für jeden Messvorgang auf eine vorbestimmte Temperatur erwärmt werden,
- die auf eine vorbestimmte Temperatur erwärmten Flüssigkeitstropfen innerhalb der Detektormesszeit mit konstanter Rate durch einen Laserstrahl geführt werden,
- für die jeweilige Temperatur das für die Tröpfchengröße und dessen Brechungsindex charakteristische Interferenzmuster detektiert wird,
- die für die jeweiligen Tröpfchentemperaturen und Tröpfchengröße ermittelten Interferenzmuster miteinander verglichen werden, wobei eine detektierte signifikante Interferenzmusteränderung bei gleicher Tropfengröße den Phasenübergang von flüssig nach fest charakterisiert.

2. Verfahren nach Anspruch 1,
**dadurch gekennzeichnet, dass**
die Tröpfchengröße mittels eines Photomultiplier ermittelt wird.

3. Verfahren nach Anspruch 1 und 2,
**dadurch gekennzeichnet, dass**
die Flüssigkeitströpfchen durch einen polarisierten, gepulsten oder konstanten Laserstrahl geführt werden.

4. Verfahren nach Anspruch 1 bis 3,
**dadurch gekennzeichnet, dass**
die Detektierung der Interferenzmuster mittels eines auf die Laserlichtfrequenz abgestimmten CCD-Arrays oder eines Photopapiers erfolgt.

5. Verfahren nach Anspruch 1 bis 4,
**dadurch gekennzeichnet, dass**
die in einem Gasstrom befindlichen Flüssigkeitstropfen vor Durchquerung des Laserlichts eine Temperatur regelbare Heizstrecke durchlaufen.

6. Verfahren nach Anspruch 1 bis 5,
**dadurch gekennzeichnet, dass**
die Flüssigkeitstropfen aus einer wässrigen Harnstofflösung bestehen.

7. Verfahren nach Anspruch 1 bis 6,
**dadurch gekennzeichnet, dass**
der Phasenübergang in Abhängigkeit von der Tröpfchengröße, der Tröpfchentemperatur und der Zeit ermittelt wird.

8. Verfahren nach Anspruch 1 bis 7,
**dadurch gekennzeichnet, dass**
die Geschwindigkeit des Gasstromes, mit dem die Flüssigkeitströpfchen durch den Laserstrahl geführt werden, einstellbar ist.

9. Verfahren nach Anspruch 1 bis 8,
**dadurch gekennzeichnet, dass**
die Temperatur für jeden Messvorgang stufenweise bis zur Verdampfung der Flüssigkeit in dem kristallinen Flüssigkeitstropfen erhöht wird.

10. Verfahren nach Anspruch 1 bis 9,
**dadurch gekennzeichnet, dass**
die ermittelten Daten des Phasenübergangs der Flüssigkeitströpfchen von flüssig nach fest zur Beurteilung einer Reduktionsmittelsteuerung einer selektiven katalytischen Reduktion von Abgasen eines Verbrennungsmotors mittels einer Harnstoff-Wasser-Lösung zur Verringerung der NOₓ-Emission verwendet werden.
